# EUROPEAN PATENT APPLICATION

(11) **EP 0 986 235 A1**
(43) Date of publication of application: **15.03.2000**
(21) Application number: 98117086.3
(22) Date of filing: 10.09.1998
(51) Int. Cl.: H04M 1/72, H04M 9/02

(54) **Single-line multi-extension telephone system**

(71) Applicant: Hsu, Peter, Taipei (TW)
(72) Inventor: Hsu, Peter, Taipei (TW)
(74) Representative: Helms, Joachim, Dipl.-Ing. Patentanwalt

(57) **Abstract**

A single-line multi-extension telephone system includes a telephone line, a plurality of extensions respectively connected to the telephone line, and a plurality of auto on-line control systems respectively installed in the extensions enabling the extensions to be operated to achieve the function of a broadcasting system, the function of an intercom system, and the function of a recording system.

## Description

### BACKGROUND OF THE INVENTION

The present invention relates to a telephone system, and more specifically to a single-line multi-extension telephone system which enables the extensions to be independently used, and provides additional intercom and broadcasting functions.

In a telephone system having one or multiple lines with multiple extensions, when one exchange line is occupied by a telephone, the other extensions become unfunctional to such an exchange line, i.e., one exchange line serves only one extension at a time. Therefore, the extensions of a telephone system are not fully utilized.

### SUMMARY OF THE INVENTION

The present invention has been accomplished under the circumstances in view. The present invention provides a single-line multi-extension telephone system which comprises a telephone line, a plurality of extensions respectively connected to the telephone line, and a plurality of auto on-line control systems respectively installed in the extensions enabling the extensions to be operated to achieve the function of a broadcasting system, the function of an intercom system, and the function of a recording system.

### BRIEF DESCRIPTION OF THE DRAWINGS

The foregoing and other features and advantages of the present invention will be more clearly understood from the following detailed description and the accompanying drawings, in which,

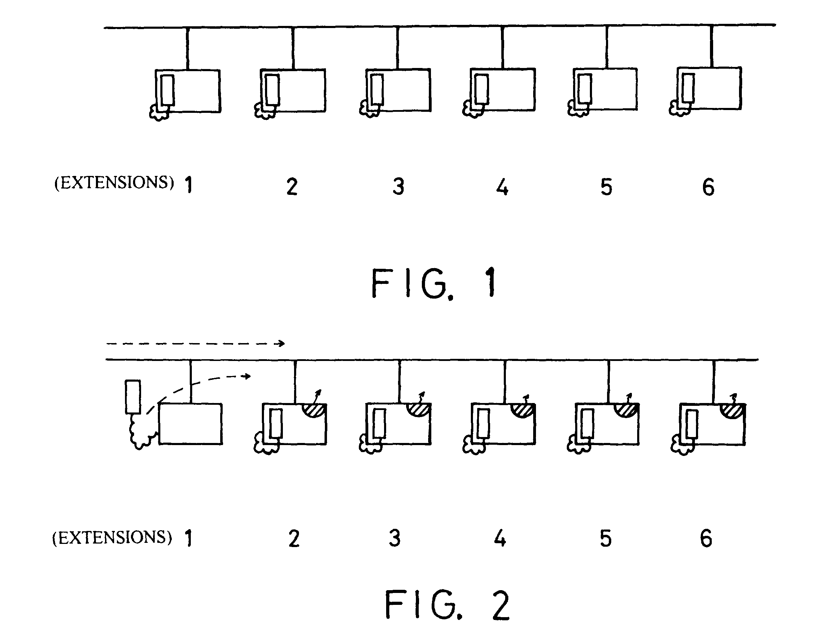

Figure 1 is a schematic drawing showing the arrangement of a single-line multi-extension telephone system according to the present invention,
Figure 2 is a schematic drawing showing the arrangement of the broadcasting system of the present invention,

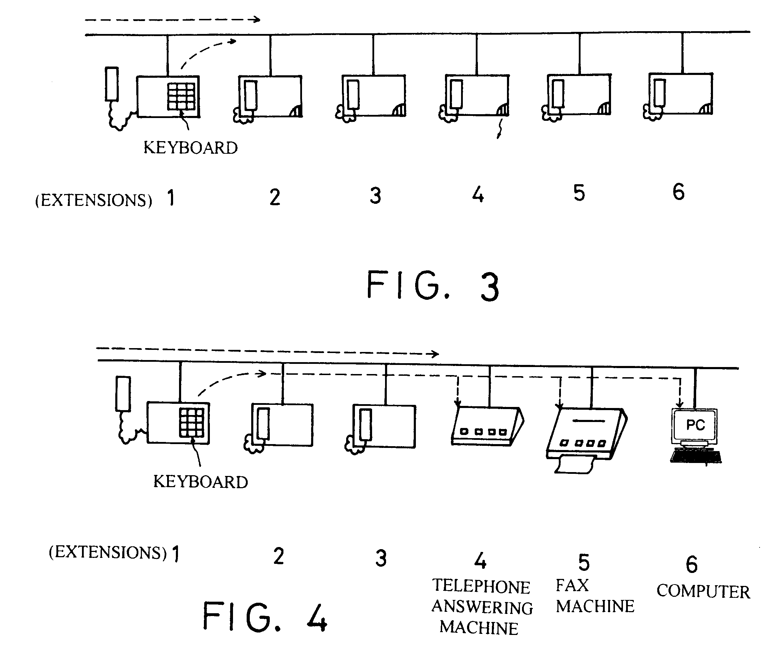

Figure 3 is a schematic drawing showing the arrangement of the intercom system of the present invention,
Figure 4 is a schematic drawing showing the arrangement of the recording system according to the present invention, and

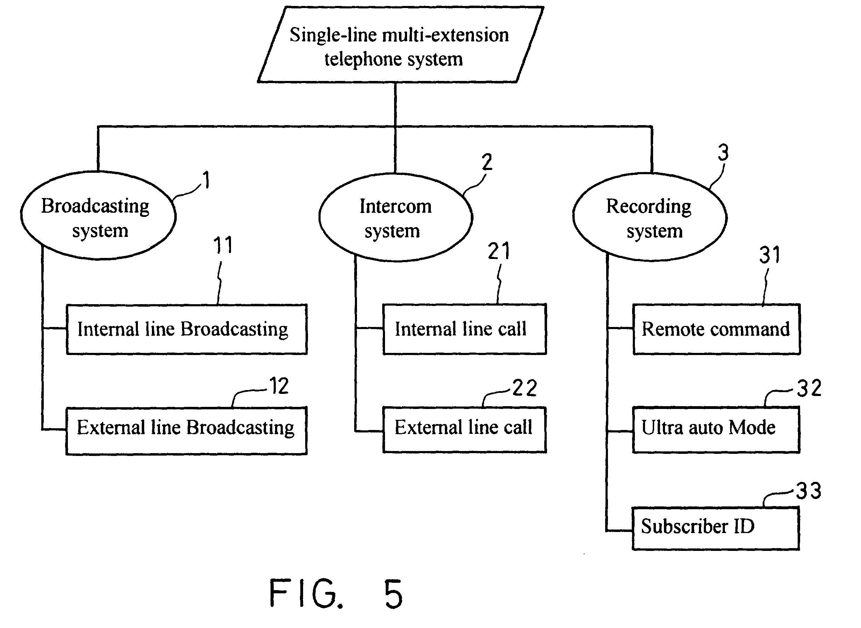

Figure 5 is a system block diagram according to the present invention.

### DETAILED DESCRIPTION OF THE PREFERRED EMBODIMENT

Referring to Figures from 1 through 5, a single-line multi-extension telephone system is generally comprised of a broadcasting system **1**, an intercom system **2**, and a recording system **3**.

The single-line multi-extension telephone system has an auto on-line control system in each extension, so that all the extensions can be linked. The auto on-line control system is comprised of an on-line initial detector, and an on-line control circuit. The on-line initial detector detects on-line state, i.e., the on-line initial detector outputs a control signal to the on-line control circuit when the on-line voltage drops from an open circuit voltage (high voltage status) to a loop voltage (low voltage status), causing the on-line control circuit to be started, and therefore the respective extension enters an on-line status.

The aforesaid on-line control system is of the known art, and intensively used in the recording systems of regular telephone answering machines. The aforesaid on-line control circuit is intensively used in regular hand-free dialing devices, having a button (HD), which drives the extension into on-line status when depressed.

When either extension of the telephone line enters an on-line status, the other extensions follow, enabling the single-line multi-extension telephone system to be changed into either of the following systems:
1) Broadcasting system **1**:
   The extensions each have an output speaker or hand-free dialing device. Because all extensions follow when one extension enters an on-line status, on-line incoming signal is sent through the output speaker or speaker of hand-free dialing device of each extension into the nearby air to achieve a broadcasting function. The broadcasting function includes:
   1-1) Internal line broadcasting **11**:
      When the user picks up one extension and calls the name of a person, the voice message is broadcast through the speakers of the other extensions.
   1-2) External line broadcasting **12**:
      When an incoming call enters the telephone line and one extension is picked up by a person, the voice message of the name of the person called by the incoming call or repeated by the operator or the person who firstly picked up the telephone is broadcast through the speakers of the extensions.
      When a person picks up one extension during the broadcasting of a voice message, a particular button can be depressed to output a reset code, enabling the extension to be returned to the initial state (off-line state). Any person can depress the reset code button of either extension to return all extensions to the off-line state when no people answer the incoming call; said automatic cut-off can be controller by preset timing.
2) Intercom system **2**:
   The extensions are respectively equipped with a subscriber ID means. The subscriber ID means is capable of setting and recognizing a subscriber ID. Each extension also has an electronic ringing circuit and its output means for example buzzer or speaker. When a particular subscriber ID enters the line, the subscriber ID means recognizes the code, and then produces a control signal to the electronic ringing circuit, causing the electronic ringing circuit outputs a ringing signal through its output means. The operation of the intercom system includes two ways:
   2-1) Internal line call **21**:
      When an user wishes to call a person at a particular extension, the user can input the subscriber ID of the extension to be called through either extension, causing the subscriber ID means of the assigned extension to output a ringing tone.
   2-2) External line call **22**:
      When an incoming call enters the line and one extension is picked up by a person, the person who picked up one extension can input a particular subscriber ID to call the person at a particular extension. When the inputted subscriber ID is recognized by the subscriber ID means of a particular extension, the respective subscriber ID means automatically produces a ringing signal and outputs the ringing signal through its output means.
      If an incoming call or subscriber ID is rejected by a particular extension, the respective extension immediately returns to an off-line state. The extensions can be returned to an off-line state by a reset code. The auto on-line control system of each extension can be set to automatically return to an off-line state a set length of time after on-line.
3) Recording system **3**:
   This belongs to an extension apparatus like a fax machine, computer (having modem data/fax in it) or telephone answering machine that receives and records incoming message. It operates in the following modes:
   3-1) Usage of the extension apparatus's remote command **31**:
      The extension apparatus's remote command **31**, is provided by the extension which is connected to the phone jack of the extension apparatus. When the extension's hook is off, the apparatus which receives and records incoming message enters Tel Mode, and the user can then input a remote command through the extension. Alternatively, when the apparatus enters Tel Mode, the calling party can input a remote command into the apparatus, causing the apparatus to receive and record the message.
      The apparatus which receives and records incoming message is the aforesaid auto on-line control system. When at an on-line state, the on-line control system enters Tel Mode to receive a remote command. When any person who picked up an extension and heard the voice of having fax/modem/voice message to be inputted, he (she) can then input the remote command of the extension apparatus (which entered Tel Mode), causing it to receive and record the incoming message.
   3-2) Ultra Auto Mode **32**:
      Usually extension apparatus enters Tel Mode after a predetermined number of ringing sounds, and then enters Auto Mode to recognize fax/modem/telephone/answer. According to the present system, like the statement of 3-1, the auto on-line control system enters Tel Mode when detects an incoming message, then enters Auto Mode to recognize the incoming message of fax/modem/telephone/answer, and then to automatically receive and record the incoming message. This method eliminates the procedure of counting the number of ringing sounds, and the auto on-line control system automatically enters Tel Mode to start the operation of Auto Mode.
      3-2-1) Slave Mode under Ultra Auto Mode:
         As indicated in 3-2), when several extension apparatus such as fax machines and computers having fax/modem in it, are connected to one telephone line, the fax machines and the computers respectively output a transmission protocol signal to the calling party when entered Ultra Auto Mode, causing a recognition interference. The aforesaid Slave Mode eliminates this problem. When one extension apparatus which is installed with Slave Mode enters Ultra Auto Mode, Slave Mode stops the extension apparatus from providing a transmission protocol signal, but recognizes on-line transmission protocol signal from the transmitting party or the receiving party and then sets the specification of recognized transmission protocol signal in Auto Mode and starts to receive and record the message. Therefore, any extension apparatus which has Slave Mode in it receives and records incoming message but do not participate in transmission protocol. If a fax machine is set having Slave Mode, it records incoming message in its memory means and/or prints out received incoming message. Therefore, the aforesaid arrangement eliminates a transmission protocol conflict, and enables incoming message to be recorded by two or more extension apparatus.
   3-3) Subscriber ID **33** apparatus:
      This subscriber ID apparatus is capable of setting and recognizing a subscriber ID, for example, setting the subscriber ID of *1, *2, or #1, #2, ... etc. through Subscriber ID Setting Mode. When a fax/modem/voice message comes, an extension apparatus user can input a particular subscriber ID to start a particular extension apparatus, causing it to receive the message, and the other extension apparatus will automatically get off the line after a recognition procedure.
      Therefore, the subscriber ID apparatus can also be used in 3-3 Ultra Auto Mode to assign a particular extension apparatus in receiving an incoming message. This arrangement eliminates the problem of having several extension apparatus to simultaneously respond an incoming message from one telephone line.
      The single-line multi-extension telephone system also provides following additional functions:
      -- Flash Key:
         When a system user clicks the Flash Key at one extension apparatus during an off-line state, the respective extension apparatus returns from the broken circuit high voltage status to the closed circuit low voltage status, and the condition is immediately detected by the respective auto on-line control system, causing the respective extension apparatus to get on the line, therefore the functions of the aforesaid broadcasting system **1**, intercom system **2** and recording system **3** can be repeatedly used.
      -- Limitation of auto on-line control system's initial number code:
         When one system user uses any extension apparatus to dial a telephone number, the other extension apparatus will be turned from an off-line state to an on-line state if no limitation is confined. Therefore, a limitation process is needed to prevent the other extension apparatus from getting on the line. When the auto on-line control system of one extension apparatus enters an on-line state, a number code detector of the respective extension apparatus detects the presence of a number code, and provides a disable control signal to cut off the auto on-line control system of the respective extension apparatus immediately upon the detection of such the number code, i.e., the number code detector is designed for auto off-line control.
      -- The initial code of the aforesaid subscriber ID uses * or # code system to discriminate from the dialing code.
      -- The setting of a subscriber ID must be easy to be memorized, for example, it can be made in the form of #11, #12, #13, *1, *2, *3 ... etc. When both communication parties commonly use the present invention, the subscriber ID provided from the system at one party will be transmitted to the system at the opposite party.

      In the aforesaid broadcasting system **1**, intercom system **2** and recording system **3**, the auto on-line control system is respectively built in each extension apparatus. An auto on-line control system may be made in an independent apparatus and connected externally to the telephone line and the related extension apparatus such as telephone, telephone answering machine, fax or computer with modem. The independent apparatus comprises a telephone line impedance matching circuit and an auto on-line control system. The telephone line impedance matching circuit matches the impedance of the exchange line, so as to obtain a stable signal transmission quality. It can be made in the form of a transformer, a speech network, or any type of load impedance. The detailed arrangement of the independent apparatus is outlined hereinafter.
4) Independent Apparatus:
   It comprises a telephone line impedance matching circuit and an auto on-line control system.
   4-1) Having output speaker means:
      The independent apparatus can work for internal line broadcasting as the function of the aforesaid broadcasting system **1**.
   4-2) Having a subscriber ID apparatus, an electronic ringing circuit and output means (speaker, buzzer) like the aforesaid intercom system **2**. Therefore, the independent apparatus can be operated for an internal line call as well as an external line call like the aforesaid intercom system **2**.
      The independent apparatus at one extension apparatus can be operated to drive the independent apparatus at another extension apparatus to ring.
      The connection of the independent apparatus to a telephone line is achieved as follows:
      -- The independent apparatus can have two jacks, namely, the line jack and the phone jack. The line jack receives the telephone line. The phone jack is connected to the line jack of a telephone.
      -- If the telephone used has a line jack and a phone jack, the line jack is connected to the telephone line, and the phone jack is connected to the line jack (or phone jack) of the independent apparatus.
      -- The telephone line can be connected to a junction box, which has two output terminals respectively connected to the telephone and the independent apparatus.
      -- The independent apparatus can have a line jack connected to the telephone line, and a male plug connected to the line jack of the telephone.

      The aforesaid connection methods enable the independent apparatus and the telephone to be connected to the telephone line.
   4-3) The independent apparatus can be connected to the phone jack of one extension apparatus that receives and records an incoming message. When one extension (telephone) of the single-line multi-extension telephone system enters an on-line state, the respective independent apparatus enters an on-line state too, and the extension apparatus which receives and records an incoming message enters Tel Mode, like the operation of the aforesaid 3-1, the calling party or the person to picked up the phone can input a remote command, causing a particular extension apparatus to receive and record the incoming message.

It is to be understood that the drawings are designed for purposes of illustration only, and are not intended as a definition of the limits and scope of the invention disclosed.

## Claims

1. A single-line multi-extension telephone system comprising a telephone line, a plurality of extensions respectively connected to said telephone line, and a plurality of auto on-line control systems respectively installed in said extensions to form a linking management system, said auto on-line control systems each comprising an on-line initial detector and an on-line control loop, said on-line initial detector outputting a control signal when said telephone line turns from an off-line state to an on-line state, said on-line control loop being controlled by the control signal from said on-line initial detector to switch the respective extension from an off-line state to an on-line state, enabling said extensions to be communicated with one another, said extensions each having output speaker means, wherein when one of said extensions is picked up by an user and enters an on-line state, the respective auto on-line control system and output speaker means follow, enabling an voice message inputted into the respective extension by the user to be broadcast through the output speaker means of the other extensions so as to achieve a broadcasting management, said broadcasting management enabling an user to use single-line multi-extension telephone system for an internal line call to call a person at either one of said extensions.

2. The single-line multi-extension telephone system wherein said extensions are hand-free telephone sets capable of outputting received incoming signal to achieve a broadcasting function.

3. A single-line multi-extension telephone system comprising a telephone line, a plurality of extensions respectively connected to said telephone line, and a plurality of auto on-line control systems respectively installed in said extensions to form a linking management system, said auto on-line control systems each comprising an on-line initial detector and an on-line control loop, said on-line initial detector outputting a control signal when said telephone line detects a voltage change at said telephone line and turns from an off-line state to an on-line state, said on-line control loop being controlled by the control signal from said on-line initial detector to switch the respective extension from an off-line state to an on-line state, enabling said extensions to be communicated with one another, said extensions each comprising a subscriber ID and loop means for setting a subscriber ID, the subscriber ID and loop means of each of said extensions outputting a control signal to the respective extension when recognizing a subscriber ID from said telephone line, causing the respective extension to output a ringing signal through a respective electronic ringing loop, the subscriber ID and loop means of each one of said extensions turning the respective extension from an on-line state to an off-line state when a subscriber ID which comes from said telephone line is rejected, the subscriber ID and loop means of each of said extensions having a DTMF receiver which receives incoming multi-frequency signal from said telephone line, then converts received multi-frequency signal into a digital signal for comparison with the respective subscriber ID set in it through a respective keyboard means in the respective extension; when an user picks up one extension and input the subscriber ID of an assigned extension, the other extensions are turned to an on-line state, and the assigned extension is driven to output a ringing signal so that the single-line multi-extension telephone system can be operated to achieve the function of an intercom system for an internal line call or an external line call.

4. A single-line multi-extension telephone system comprising a telephone line, a plurality of extensions respectively connected to said telephone line, and a plurality of auto on-line control systems respectively installed in said extensions to form a linking management system, said auto on-line control systems each comprising an on-line initial detector and an on-line control loop, said on-line initial detector detecting a line voltage drop from said telephone line and outputting a control signal when said telephone line turns from an off-line state to an on-line state, said on-line control loop being controlled by the control signal from said on-line initial detector to switch the respective extension from an off-line state to an on-line state, enabling said extensions to be communicated with one another, said extensions each comprising an incoming message recording apparatus, said incoming message recording apparatus being a fax machine or a computer having a modem connected thereto that is capable of recognizing telephone/fax/modem signal from said telephone line and recording received incoming message under a Tel Mode controlled by the auto on-line control system of the respective extension.

5. A single-line multi-extension telephone system comprising a telephone line, a plurality of extensions respectively connected to said telephone line, and a plurality of auto on-line control systems respectively installed in said extensions to form a linking management system, said auto on-line control systems each comprising an on-line initial detector and an on-line control loop, said on-line initial detector detecting a line voltage drop from said telephone line and outputting a control signal when said telephone line turns from an off-line state to an on-line state, said on-line control loop being controlled by the control signal from said on-line initial detector to switch the respective extension from an off-line state to an on-line state, enabling said extensions to be communicated with one another, said extensions each comprising an incoming message recording apparatus, said incoming message recording apparatus being a telephone answering machine or a computer with fax/modem means; when the auto on-line control system of one of said extensions is started, it turns on a Tel Mode for permitting the respective extension to be communicated with the other extensions and to receive a multi-frequency command from said telephone line; when an incoming message comes into said telephone line, an extension user can input a remote command to drive another extension to receive and record the incoming message.

6. The single-line multi-extension telephone system of claim 5 wherein the incoming message recording apparatus of each of said extensions has means for inputting a set code by the user, enabling the inputted set code to be driven by a remote command to turn on the respective incoming message recording apparatus in receiving and recording an incoming message.

7. The single-line multi-extension telephone system of claim 5 wherein the incoming message recording apparatus of each of said extensions comprises a subscriber ID apparatus capable of setting and recognizing at least one subscriber ID, and recognizing a multi-frequency remote command received from said telephone line, said subscriber ID apparatus starting the Tel Mode of the respective incoming message recording apparatus when received multi-frequency remote command is recognized matching with the subscriber ID set therein, causing the respective incoming message recording apparatus to proceed with a telephone answering operation or to turn a fax/computer fax/modem from a receiving mode to a transmitting mode; said subscriber ID apparatus comprising a DTMF receiver for receiving a multi-frequency signal and converting it into a digital signal, enabling an user to selectively drive the incoming message recording apparatus of said extensions to receive an incoming message.

8. The single-line multi-extension telephone system of claim 7 wherein the subscriber ID apparatus of said extensions allow an user to input a code corresponding to a built-in remote command in the incoming message recording apparatus of one of said extensions, so that an user can input a code through said telephone line to drive the incoming message recording apparatus of one of said extensions, causing it to run a remote command.

9. The single-line multi-extension telephone system of claim 1 wherein said extensions each have a flash key, and an extension returns from an off-line high voltage status to an on-line low voltage status when the respective flash key is clicked by a telephone system user.

10. The single-line multi-extension telephone system of claim 1 wherein said extensions are independent broadcasting means.

11. The single-line multi-extension telephone system of claim 3 wherein said extensions are independent intercom means.

12. The single-line multi-extension telephone system of claim 10 wherein said independent broadcasting means each comprise a phone jack for the connection of a telephone.

13. The single-line multi-extension telephone system of claim 11 wherein said independent intercom means each comprise a phone jack for the connection of a telephone.
